# EUROPEAN PATENT APPLICATION

(11) **EP 3 263 923 A1**
(43) Date of publication of application: **03.01.2018**
(21) Application number: 16755738.8
(22) Date of filing: 26.02.2016
(51) Int. Cl.: F16C 9/02, F16C 17/02, F16C 33/14

(54) **MANUFACTURING METHOD FOR SLIDING BEARING, AND SLIDING BEARING**

(30) Priority: 27.02.2015 JP 2015039114
(71) Applicant: TAIHO KOGYO Co., Ltd., Toyota-shi, Aichi 471-8502 (JP)
(72) Inventor: SEKI, Daisuke, Toyota-shi Aichi 471-8502 (JP); TAKAGI, Yuji, Toyota-shi Aichi 471-8502 (JP)
(74) Representative: Bandpay & Greuter
(86) International application number: PCT/JP2016/055949
(87) International publication number: WO 2016/136994

(57) **Abstract**

It is possible to provide a sliding bearing that can obtain a friction reduction effect, and can suppress the total amount of outflow oil. A manufacturing method of the present invention is a method of manufacturing a sliding bearing (1) in which half members (2, 2) are arranged in a vertical arrangement, the half members (2, 2) being obtained by dividing a cylinder into two parts along a line parallel with the axial direction and having a metal layer (21) and a lining layer (22) provided on the inner circumferential surface of the metal layer (21), the manufacturing method comprising: a groove configuration step (S30) (first step) of providing a groove (3) in an axial end portion of the half member (2) on the lower side, the groove (3) extending in the circumferential direction on a downstream side in a rotation direction, wherein in the groove configuration step (S30), the depth (d) of the groove (3) is set smaller than the result of subtracting the sum of the tolerance (a1) of the thickness of the lining layer (22) and the tolerance (a2) of the depth of the groove (3) from the thickness (h1) of the lining layer (22).

## Description

### Technical Field

The present invention relates to technology regarding a sliding bearing manufacturing method, and relates to technology regarding a method of manufacturing a sliding bearing in which half members, which are obtained by dividing a cylinder into two parts along a line parallel with the axial direction, are arranged in a vertical arrangement.

### Background Art

Conventionally, a sliding bearing having a halved structure, in which two members obtained by dividing a cylinder are arranged together, is known as a bearing for supporting the crank shaft of an engine, but there is a problem of high friction due to the high viscosity of oil when the temperature is low. In view of this, a bearing is known in which a clearance portion (groove) is formed over the entire circumference of each of the two axial end portions of the bearing (e.g., see Patent Document 1).

### Citation List

### Patent Document

Patent Document 1: JP 2003-532036A

### Summary of Invention

### Technical Problem

However, with the conventional bearing provided with grooves, it is not possible to achieve both an increase in the amount of oil drawn in and suppression of the amount of oil that leaks from the two axial end portions. An improved friction reduction effect cannot be expected.

In view of this, the present invention was achieved in light of the foregoing problem and provides a sliding bearing that can suppress the total amount of outflow oil and can obtain an improved friction reduction effect.

### Solution to Problem

In light of the above-described problem to be solved by the present invention, the following describes a solution for this problem.

Specifically, according to an aspect of Claim 1, there is provided a sliding bearing manufacturing method of the present invention is a method of manufacturing a sliding bearing in which half members are arranged in a vertical arrangement, the half members being obtained by dividing a cylinder into two parts along a line parallel with the axial direction and having a metal layer and a lining layer provided on an inner circumferential surface of the metal layer, the manufacturing method including: a first step of providing a groove in an axial end portion of the half member on a lower side, the groove extending in a circumferential direction on a downstream side in a rotation direction, wherein in the first step, a depth of the groove is set smaller than a result of subtracting a sum of a tolerance of a thickness of the lining layer and a tolerance of the depth of the groove from the thickness of the lining layer.

According to an aspect of Claim 2, the manufacturing method includes a second step of providing a peripheral edge part in the axial end portion of the half member on the lower side, the peripheral edge part being located outward in an axial direction relative to the groove, wherein in the second step, an inner circumferential surface of the peripheral edge part is on an inner circumferential side relative to a bottom surface of the groove.

According to an aspect of Claim 3, there is provided a sliding bearing manufactured by the above-described manufacturing method.

### Advantageous Effects of Invention

The present invention achieves effects such as the following.

Specifically, the groove is provided so as to not impair the generation of oil film pressure, thus making it possible to obtain a friction reduction effect while also reducing the frictional area, and also making it possible to suppress the total amount of outflow oil. Also, the depth of the groove is set smaller than the result of subtracting the sum of the tolerance of the thickness of the lining layer and the tolerance of the depth of the groove from the thickness of the lining layer, and therefore when forming the groove using a cutter such as a circular saw, it is possible to prevent the cutter from coming into contact with the metal layer that is harder than the lining layer, thus extending the lifetime of the cutter. Also, by providing the groove in only the lining layer that has a hardness capable of being press-molded, it is possible to form the groove by press-molding.

### Brief Description of Drawings

FIG. 1 is a front view of a sliding bearing according to an embodiment of the present invention.
FIG. 2(A) is a plan view of half members that constitute the sliding bearing according to the present invention. FIG. 2(B) is a cross-section value of the same taken along II(B)-II(B). FIG. 2(C) is a cross-sectional view of the same taken along II(C)-II(C).
FIG. 3 is a flowchart showing a half member manufacturing method according to an embodiment of the present invention.

### Description of Embodiments

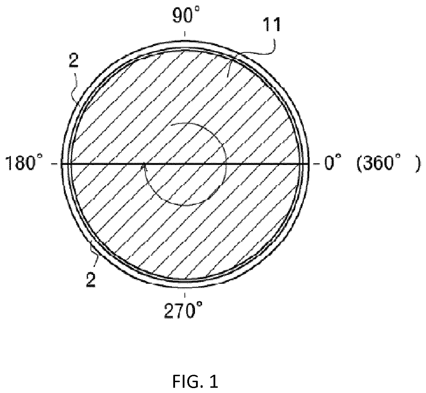

Next, embodiments of the invention will be described. Note that FIG. 1 is a front view of a sliding bearing 1, upward and downward in the figure being considered to be the up-down direction, and the front direction and the back direction in the figure being considered to be the axial direction (front-rear direction).

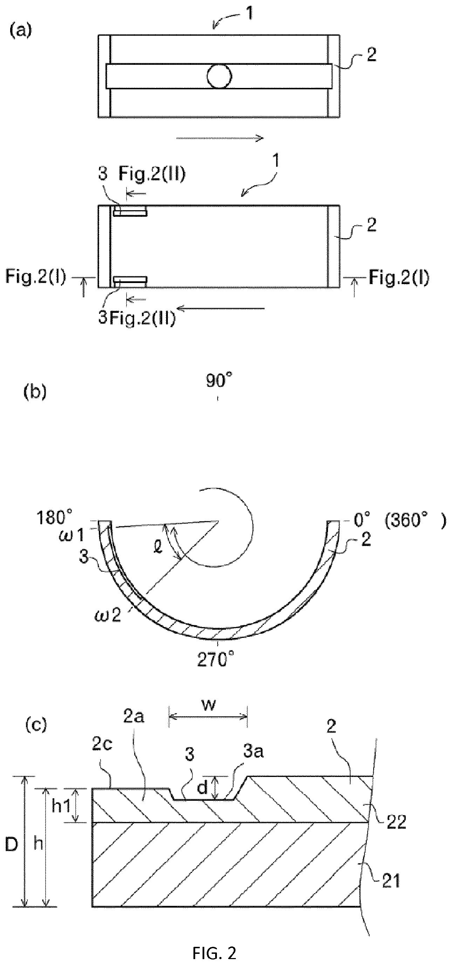

First, half members 2 that constitute sliding bearing 1 according to the present invention will be described with reference to FIGS. 1 and 2.

Sliding bearing 1 is a cylindrical member, and is applied to a sliding bearing structure for crank shaft 11 of an engine as shown in FIG. 1. Sliding bearing 1 is constituted by two half members 2. Two half members 2 are shaped as portions obtained by dividing a cylinder into two portions along a line parallel with the axial direction, and have a semicircular cross-section. In the present embodiment, half members 2 are arranged in a vertical direction, and the mating faces thereof are arranged in a horizontal arrangement. In the case where crank shaft 11 is supported by sliding bearing 1, a predetermined gap is formed, and lubricating oil is supplied to this gap through an oil passage that is not illustrated.

FIG. 2(A) shows the upper and lower half members 2. Note that in the present embodiment, the rotation direction of crank shaft 11 is considered to be the clockwise direction in a front view as shown by the arrow in FIG. 1. Also, a bearing angle ω is defined so that it is 0 degrees at the position at the right end in FIG. 2(B), and bearing angle ω increase along the counter-clockwise direction in FIG. 2(B). In other words, in FIG. 2(B), the bearing angle ω is defined as 180 degrees at the position at the left end, and the bearing angle ω is defined as 270 degrees at the position at the lower end.

A groove extending in the circumferential direction is provided in the inner circumferential face of upper half member 2, and a circular hole is provided in the center. Also, the mating face of upper half member 2 is arranged in the horizontal direction. As shown in FIG. 2(C), half member 2 has metal layer 21 and lining layer 22.

Grooves 3 are formed in axial end portions of the inner circumferential face of lower half member 2.

Also, peripheral edge part 2a that forms the outward surface, in the axial direction, of groove 3 is formed such that a height h from the outer circumferential surface of half member 2 is smaller than a height D from the outer circumferential surface of half member 2 to the abutting surface. In other words, peripheral edge part 2a on the outward side in the axial direction is formed so as to be lower than the abutting surface that abuts against crank shaft 11.

Grooves 3 will be described below with reference to FIGS. 2(B) and 2(C).

Grooves 3 are provided in lower half member 2. In the present embodiment, two grooves 3 are provided in parallel in the axial direction. Specifically, a groove 3 extends in the circumferential direction from a position (where bearing angle ω is ω1) separated from the mating face on the downstream side in the rotation direction of crank shaft 11 (where bearing angle ω is 180 degrees), to a bearing angle ω2 in the positive direction (counter-clockwise direction) of the bearing angle ω. In lower half member 2, the mating face on the right side in FIG. 2(B) is the mating face on the upstream side in the rotation direction, and the mating face on the left side in FIG. 2(B) is the mating face on the downstream side in the rotation direction.

The width of groove 3 is denoted as w, as shown in FIG. 2(C).

Also, a depth d of groove 3 is smaller than the height D from the outer circumferential surface of half member 2 to the abutting surface.

Also, peripheral edge part 2a is higher than a bottom surface 3a of groove 3, and therefore is a wall for preventing the re-leakage of oil that has leaked from the sliding face to the axial end portion or oil that has been sucked back in, thus making it possible to suppress the amount of leaked oil. Accordingly, the amount of oil drawn in at a low temperature in particular increases, and it is possible to improve a friction reduction effect due to a quick temperature rise.

Also, due to peripheral edge part 2a being lower than the surrounding abutting surface that abuts against crank shaft 11, even if crank shaft 11 becomes inclined and is contact with only the end portion on one side in the axial direction (one-side contact state), it is possible to suppress opportunities for contact between peripheral edge part 2a and crank shaft 11, thus making it possible to prevent damage to peripheral edge part 2a.

By providing grooves 3 according to the present embodiment, the FMEP reduction amount increases. In particular, the FMEP reduction amount increases in the low engine rotation speed range. Here, FMEP refers to a value for examining the friction tendency, and when the FMEP reduction value increases, friction decreases. For example, when the engine is started at a low temperature for example, the FMEP reduction amount increases, and friction decreases.

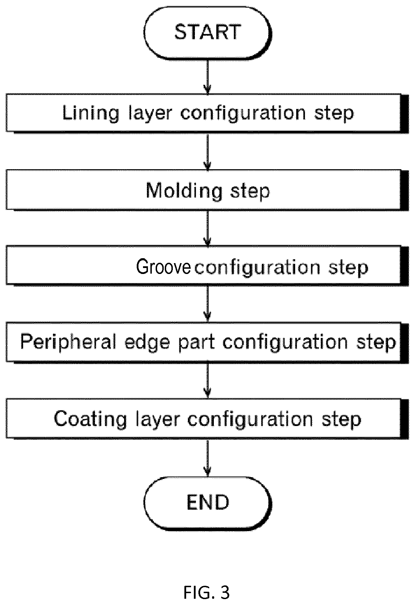

Next, a method of manufacturing lower half member 2 of sliding bearing 1 will be described with reference to FIG. 3.

The method of manufacturing lower half member 2 includes a lining layer configuration step S10 of providing lining layer 22 on metal layer 21, a molding step S20 of molding lining layer 22 and metal layer 21 into a semicircular shape, a groove configuration step S30 that is a first step for forming groove 3, a peripheral edge part configuration step S40 that is a second step for forming peripheral edge part 2a, and a coating layer configuration step S50 of forming a coating layer (not shown in the figures) on the surface of lining layer 22. These steps will be described in detail below.

In the lining layer configuration step S10, lining layer 22 is provided on metal layer 21. More specifically, lining layer 22 is provided on metal layer 21 by performing rolling processing on metal layer 21 and lining layer 22. Here, metal layer 21 is constituted by a material made of metal, for example is constituted by an iron-based material. Also, lining layer 22 is constituted by a material made of a metal having a lower hardness than metal layer 21, for example is constituted by an aluminum-based material.

Next, in the molding step S20, metal layer 21 and lining layer 22 are molded into a semicircular shape. More specifically, metal layer 21 and lining layer 22 are molded into a semicircular shape by performing press molding.

Next, in the groove configuration step S30, groove 3 is formed. Then, in the peripheral edge part configuration step S40, peripheral edge part 2a is formed.

As a method of forming groove 3 and peripheral edge part 2a according to a first embodiment, the following describes a method of forming groove 3 and peripheral edge part 2a by cutting processing.

This cutting processing is performed by a cutter such as a circular saw. In the groove configuration step S30, groove 3 is formed to have a depth d that is less than the result of subtracting the sum of a tolerance a1 of the thickness of lining layer 22 and a tolerance a2 of the depth of groove 3 from a thickness h1 of lining layer 22. For example, letting h1 be the thickness of lining layer 22, a1 be the tolerance of the thickness of lining layer 22, d be the depth of the groove, and a2 be the tolerance of the depth of groove 3, the depth d of groove 3 is represented by d < h1-(a1+a2).

According to this configuration, the depth d of groove 3 is less than the thickness h1 of lining layer 22, and therefore when forming groove 3, the cutter does not come into contact with metal layer 21, thus making it possible to extend the lifetime of the cutter.

Also, in the peripheral edge part configuration step S40, an inner circumferential surface 2c of peripheral edge part 2a is formed on the inner circumferential side relative to the bottom surface 3a of groove 3, and therefore peripheral edge part 2a is also formed inside lining layer 22. Accordingly, the cutter does not come into contact with metal layer 21 when forming peripheral edge part 2a, thus making it possible to extend the lifetime of the cutter.

As a method of forming groove 3 and peripheral edge part 2a according to a second embodiment, the following describes a method of forming groove 3 and peripheral edge part 2a by press processing.

Press processing is performed using a compression presser. In the groove configuration step S30, groove 3 is formed to have a depth d that is less than the result of subtracting the sum of the tolerance a1 of the thickness of lining layer 22 and the tolerance a2 of the depth of groove 3 from a thickness h1 of lining layer 22.

According to this configuration, the depth d of groove 3 is less than the thickness h1 of lining layer 22. If the depth d of groove 3 is larger than the thickness h1 of lining layer 22, groove 3 will need to be formed up to metal layer 21, and the formation of groove 3 by press processing becomes difficult. If the depth d of groove 3 is set smaller than the thickness h1 of lining layer 22, groove 3 can be formed by press processing.

In the peripheral edge part configuration step S40, the inner circumferential surface 2c of peripheral edge part 2a is formed on the inner circumferential side relative to the bottom surface 3a of groove 3, and therefore the inner circumferential surface 2c of peripheral edge part 2a is also formed inside lining layer 22. Accordingly, peripheral edge part 2a can be formed by press processing.

Next, in the coating layer configuration step S50, a coating layer (not shown) is formed on the surface (inner circumferential surface) of lining layer 22. This coating layer is constituted by a material made of a soft metal or a resin-based material.

As described above, a manufacturing method of the present invention is a method of manufacturing sliding bearing 1 in which half members 2 are arranged in a vertical arrangement, half members 2 being obtained by dividing a cylinder into two parts along a line parallel with the axial direction and having metal layer 21 and lining layer 22 provided on an inner circumferential surface of metal layer 21, the manufacturing method comprising: a groove configuration step S30 (first step) of providing a groove 3 in an axial end portion of half member 2 on a lower side, groove 3 extending in a circumferential direction on a downstream side in a rotation direction, wherein in the groove configuration step S30, a depth d of groove 3 is set smaller than a result of subtracting a sum of a tolerance a1 of a thickness of lining layer 22 and a tolerance a2 of the depth of groove 3 from the thickness h1 of lining layer 22.

According to this configuration, groove 3 is provided so as to not impair the generation of oil film pressure, thus making it possible to obtain a friction reduction effect while also reducing the frictional area, and also making it possible to suppress the total amount of outflow oil. Also, the depth d of groove 3 is set smaller than the result of subtracting the sum of the tolerance a1 of a thickness of lining layer 22 and the tolerance a2 of the depth of groove 3 from the thickness h1 of lining layer 22, and therefore when forming groove 3 using a cutter such as a circular saw, it is possible to prevent the cutter from coming into contact with metal layer 21 that is harder than lining layer 22, thus extending the lifetime of the cutter. Also, by providing groove 3 in only lining layer 22 that has a hardness capable of being press-molded, it is possible to form groove 3 by press-molding.

The manufacturing method also has a peripheral edge part configuration step S40 (second step) of providing a peripheral edge part in the axial end portion of half member 2 on the lower side, the peripheral edge part being located outward in an axial direction relative to groove 3, wherein in the peripheral edge part configuration step S40, inner circumferential surface 2c of peripheral edge part 2a is on an inner circumferential side relative to bottom surface 3a of groove 3.

According to this configuration, when forming the peripheral edge part 2 using a cutter such as a circular saw, it is possible to prevent the cutter from coming into contact with metal layer 21 that is harder than lining layer 22, thus extending the lifetime of the cutter. Also, by providing peripheral edge part 2a in only lining layer 22 that has a hardness capable of being press-molded, it is possible to form the peripheral edge part 2 by press-molding.

### Industrial Applicability

The present invention is applicable to technology regarding a sliding bearing manufacturing method, and is applicable to technology regarding a method of manufacturing a sliding bearing in which half members, which are obtained by dividing a cylinder into two parts along a line parallel with the axial direction, are arranged in a vertical arrangement.

### Reference Signs List

- 1: Sliding bearing
- 2: Half member
- 2a: Peripheral edge part
- 3: Groove
- 11: Crank shaft
- 21: Metal layer
- 22: Lining layer

## Claims

1. A method of manufacturing a sliding bearing in which half members are arranged in a vertical arrangement, the half members being obtained by dividing a cylinder into two parts along a line parallel with the axial direction and having a metal layer and a lining layer provided on an inner circumferential surface of the metal layer, the manufacturing method comprising:
a first step of providing a groove in an axial end portion of the half member on a lower side, the groove extending in a circumferential direction on a downstream side in a rotation direction,
wherein in the first step, a depth of the groove is set smaller than a result of subtracting a sum of a tolerance of a thickness of the lining layer and a tolerance of the depth of the groove from the thickness of the lining layer.

2. The method of manufacturing a sliding bearing according to claim 1, comprising:
a second step of providing a peripheral edge part in the axial end portion of the half member on the lower side, the peripheral edge part being located outward in an axial direction relative to the groove,
wherein in the second step, an inner circumferential surface of the peripheral edge part is on an inner circumferential side relative to a bottom surface of the groove.

3. A sliding bearing manufactured by the manufacturing method according to claim 1 or 2.
